# EUROPÄISCHE PATENTANMELDUNG

(11) **EP 4 707 850 A1**
(43) Veröffentlichungstag der Anmeldung: **11.03.2026**
(21) Anmeldenummer: 24198972.2
(22) Anmeldetag: 06.09.2024
(51) Int. Cl.: G01S 7/40, G01B 11/27, G06T 7/70

(54) **KAMERABASIERTES POSITIONIEREN EINES ZUBEHÖRWERKZEUGS**

(71) Anmelder: Hella Gutmann Solutions GmbH, 79241 Ihringen (DE)
(72) Erfinder: Wicky, Hervé, 68230 Turckheim (FR); Munt, Stanislav, 79241 Ihringen (DE)
(74) Vertreter: Pfenning, Meinig & Partner mbB

(57) **Zusammenfassung**

Es wird ein Verfahren zum kamerabasierten Positionieren eines Zubehörwerkzeugs (50) auf eine Soll-Position (B) relativ zu einem Fahrzeug (1) vorgeschlagen, umfassend: bestimmungsgemäßes Ausrichten eines Kalibrierwerkzeugs (10) relativ zu einem Fahrzeug (1); Bereitstellen eines Zubehörwerkzeugs (50) mit einem Target (60) an einer vorgegebenen Stelle des Zubehörwerkzeugs (50); Erfassen des Targets (60) durch ein Kamerasystem (20) des Kalibrierwerkzeugs (10); Bereitstellen einer Soll-Position (B) des Zubehörwerkzeugs (50) relativ zum Fahrzeug (1); Bestimmen einer Ist-Position (A) des Targets (60) und damit des Zubehörwerkzeugs (50) relativ zum Fahrzeug (1); Positionieren des Zubehörwerkzeugs (50), auf Grundlage der Soll-Position (B), bis die Ist-Position (A) mit der Soll-Position (B) übereinstimmt.

## Beschreibung

Die vorliegende Erfindung betrifft ein Verfahren zum kamerabasierten Positionieren eines Zubehörwerkzeugs und ein Kalibrierwerkzeug-System, ein Computerprogramm sowie ein computerlesbares Medium zum Durchführen des Verfahrens. Das Zubehörwerkzeug kann dabei ein Zubehörwerkzeug zur Kalibrierung einer ADAS-Funktion eines Fahrzeugs, insbesondere eines Kraftfahrzeugs, sein.

Moderne Fahrassistenzsysteme, auch als ADAS (Advanced Driver Assistance Systems) bekannt, umfassen eine Vielzahl von Umfeldsensoren, die beispielsweise nach einer Reparatur oder einem Austausch von Fahrzeugkomponenten regelmäßig neu kalibriert bzw. justiert werden müssen. Dafür sind im Stand der Technik entsprechende ADAS-Kalibrierwerkzeuge und insbesondere für Servicewerkstätten vorteilhafte mobile ADAS-Kalibrierwerkzeuge bekannt.

Mit einem ADAS-Kalibrierwerkzeug wird unter anderem die Frontkamera für Fahrassistenzsysteme wie beispielsweise ACC (adaptive cruise control), Notfallbremsassistent, Spurhalteassistent, Hinderniserkennung und Verkehrsschilderkennung bis hin zu autonom fahrenden Fahrzeugen (Level 1 bis 5) justiert bzw. kalibriert. Hierzu wird das Kalibrierwerkzeug in dem durch den Hersteller vorgegebenen Abstand und Höhe so vor dem Fahrzeug positioniert, dass die Fahrzeugkamera eine Kalibriermusterabbildung erfasst und somit das interne Koordinatensystem des Kamerasystems kalibriert wird. Ein solches Werkzeug und seine bestimmungsgemäße Positionierung zu einem Fahrzeug im Zuge eines entsprechenden Kalibrierungsverfahrens wird beispielsweise in WO 2017/016541 A1 offenbart.

Um darüber hinaus weitere Systeme, wie z. B. Radarsensoren, Lidar- bzw. Lasersensoren und 360°-Umfeldkameras kalibrieren zu können, muss ein ADAS-Kalibrierwerkzeug regelmäßig um entsprechende Zubehörwerkzeuge, wie z. B. Radartrichter, Dopplergehäuse und Messmatten bzw. Messteppiche, ergänzt werden. Auch diese müssen für eine bestimmungsgemäße Kalibrierung an vorbestimmten Soll-Positionen relativ zum Fahrzeug positioniert werden - beispielsweise in einem vorbestimmten Abstand, Winkel und/oder Höhe zu einem zu kalibrierenden Umfeldsensor des Fahrzeugs - und zwar in Abhängigkeit des Sensors, Fahrzeugherstellers und Fahrzeugmodells. Die Zubehörwerkzeuge müssen für üblich manuell mit Positionierhilfsmitteln, wie z. B. Lasern (Punktlaser, Linienlaser, Laserdistanzmesser), Loten oder Messbändern, positioniert werden. Erschwerend kommt hinzu, dass die entsprechenden Positionen und Positionierungen regelmäßig Hersteller- und Modellabhängig sind. Mithin sind diese manuellen Verfahren zur Positionierung etwaiger Zubehörwerkzeuge aufwändig, fehleranfällig und benötigen für die unterschiedlichen Hersteller und/oder Fahrzeugmodelle eine große Anzahl unterschiedlicher Positionierhilfsmittel. Außerdem kann die Position bei diesen Verfahren nicht digital ermittelt und damit keine automatische Protokollierung und/oder Fehleranalyse bereitgestellt werden, die insbesondere für eine ordnungsgemäße Servicedokumentation von Bedeutung sind.

Vor diesem Hintergrund liegt der vorliegenden Erfindung die Aufgabe zugrunde, eine alternative und/oder verbesserte Lösung zum Positionieren eines Zubehörwerkzeugs bereitzustellen. Die Verbesserung kann insbesondere darin liegen, dass sich die Zubehörpositionierung einfacher und/oder nachvollziehbarer gestaltet.

Erfindungsgemäß wird diese Aufgabe durch ein Verfahren zum kamerabasierten Positionieren eines Zubehörwerkzeugs und ein Kalibrierwerkzeug-System, ein Computerprogramm sowie ein computerlesbares Medium zum Durchführen des Verfahrens mit den jeweiligen Merkmalen der entsprechenden unabhängigen Ansprüche gelöst. Mögliche Ausgestaltungen und Weiterentwicklungen ergeben sich aus den Unteransprüchen, der nachfolgenden Beschreibung und den Figuren.

Das vorgeschlagene Verfahren zum kamerabasierten Positionieren eines Zubehörwerkzeugs auf eine Soll-Position relativ zu einem Fahrzeug umfasst:
i) bestimmungsgemäßes Ausrichten eines Kalibrierwerkzeugs relativ zu einem Fahrzeug;
ii) Bereitstellen eines Zubehörwerkzeugs mit einem Target an einer vorgegebenen Stelle des Zubehörwerkzeugs;
iii) Erfassen des Targets durch ein Kamerasystem des Kalibrierwerkzeugs;
iv) Bereitstellen einer Soll-Position des Zubehörwerkzeugs relativ zum Fahrzeug;
v) Bestimmen einer Ist-Position des Targets und damit des Zubehörwerkzeugs relativ zum Fahrzeug;
vi) Positionieren des Zubehörwerkzeugs, auf Grundlage der Soll-Position, bis die Ist-Position mit der Soll-Position übereinstimmt.

Dadurch, dass ein Target, dessen Position unmittelbar mit der Position des Zubehörwerkzeugs gekoppelt ist, kamerabasiert erfasst wird, sodass eine Ist- und eine Soll-Position des Zubehörwerkzeugs einander gegenübergestellt werden können, wird die korrekte Positionierung des Zubehörwerkzeugs erleichtert und nachvollziehbarer gemacht.

Das bestimmungsgemäße Ausrichten eines Kalibrierwerkzeugs relativ zu einem Fahrzeug, also Merkmal i), kann grundsätzlich umfassen, dass Fahrzeug und Kalibrierwerkzeug derart ausgerichtet werden, dass sich das Fahrzeug in einem Erfassungsbereich, insbesondere in einem Sichtfeld, des Kamerasystems des Kalibrierwerkzeugs befindet, sodass eine eindeutige räumliche Verortung des Fahrzeugs relativ zum Kalibrierwerkzeug bereitgestellt werden kann. Dies kann beispielsweise mittels am Fahrzeug in vorbestimmten Positionen angeordneter Positionsmarker, z. B. den in WO 2017/016541 A1 gezeigten Radtargets, erfolgen. Regelmäßig umfasst das bestimmungsgemäße Ausrichten eines Kalibrierwerkzeugs relativ zu einem Fahrzeug eine Positionierung des Kalibrierwerkzeugs, z. B. einer ADAS-Kalibrierwand, insbesondere einer mobilen ADAS-Kalibrierwand, die entsprechend den Herstellerangaben des zu kalibrierenden Fahrzeugs zu erfolgen hat. So hat die Positionierung des Kalibrierwerkzeugs z. B. in einem vorbestimmten Abstand und einer vorbestimmten Höhe vor oder hinter dem Fahrzeug parallel zur Fahrzeugfront oder entsprechend zum Fahrzeugheck - also orthogonal zur Fahrzeuglängsachse - zu erfolgen. Ein entsprechendes Beispiel zur korrekten Positionierung eines Kalibrierwerkzeugs kann WO 2017/016541 A1 entnommen werden. Mit anderen Worten kann das Kalibrierwerkzeug relativ zum Fahrzeug derart ausgerichtet sein, wie es erforderlich ist, damit die Frontkamera oder wahlweise die Heckkamera des Fahrzeugs ordnungsgemäß kalibriert werden kann.

Unter Anordnung des Targets an einer vorgegebenen Stelle des Zubehörwerkzeugs kann verstanden werden, dass eine etwaige räumliche Position des Targets eindeutig einer räumlichen Position des Zubehörwerkzeugs zugeordnet oder zuordenbar ist. Diese räumliche Position kann neben den üblichen Koordinaten im zwei- oder dreidimensionalen Raum auch eine Ausrichtung oder Orientierung, also z. B. eine Drehung und/oder Kippung des Targets und damit des Zubehörwerkzeugs, umfassen.

Die Reihenfolge der erfindungsgemäßen Verfahrensmerkmale i) bis vi) ist zunächst lediglich dahingehend festgelegt, dass Merkmal ii) - zumindest insoweit die Ist-Position des Targets einer Ist-Position des Zubehörwerkzeugs zugeordnet wird oder zuordenbar ist - vor Merkmal v) und die Merkmale i) bis v) grundsätzlich vor Merkmal vi) erfolgen.

Typischerweise ist das Zubehörwerkzeug nicht Bestandteil des Kalibrierwerkzeugs. Mithin ist seine grundsätzliche Positionierung physisch nicht nur von der Position des Fahrzeugs, sondern auch von der Position des Kalibrierwerkzeugs unabhängig.

Die Ist-Position und/oder die Soll-Position können eine 3D-Position in einem Raum sein. Sie können z. B. neben einer Position in einer Ebene parallel zu einem Aufstellgrund des Fahrzeugs und/oder des Kalibrierwerkzeugs auch eine Höhe relativ zu diesem Aufstellgrund umfassen. Dabei können das Fahrzeug und das Kalibrierwerkzeug in diesem Raum feste Bezugsgrößen definieren. Dies ist typischerweise allein schon deswegen gegeben, dass das Fahrzeug und das Kalibrierwerkzeug gemäß Merkmal i) in einer festen Geometrie zueinander angeordnet sind. Die Ist-Position kann einen Abstand, einen Winkel und/oder eine Höhe relativ zu einer Fahrzeugbezugsstelle, insbesondere zu einem mittels des Zubehörwerkzeugs zu kalibrierenden Sensor, umfassen. Die Soll-Position kann einen vorgegebenen Abstand, einen vorgegebenen Winkel und/oder eine vorgegebene Höhe relativ zu einer Fahrzeugbezugsstelle, insbesondere zu einem mittels des Zubehörwerkzeugs zu kalibrierenden Sensor, umfassen.

Das Erfassen des Targets kann beispielsweise dadurch bereitgestellt werden, dass das mit dem Target bereitgestellte Zubehörwerkzeug in einem Erfassungsbereich des Kamerasystems angeordnet wird. Insbesondere kann dies dadurch erfolgen, dass das Target in einem Sichtfeld des Kamerasystems angeordnet wird.

Das kamerabasierte Erfassen eines Targets und das Bestimmen seiner Ist-Position, oder kurz Targettracking, ist grundsätzlich bekannt und soll hier nicht näher ausgeführt werden. So kann z. B. ein 2D- oder 3D-Targettracking auf Grundlage von Bilderkennung und Bildverarbeitung eines vorbestimmten Objekt- oder Targetmusters in einem vom Kamerasystem aufgenommen Bild erfolgen. Entsprechende beispielhafte Targets werden weiter unten beschrieben.

In einer Ausführungsform wird beim Positionieren des Zubehörwerkzeugs auf die Soll-Position die Ist-Position kontinuierlich bestimmt. Mit anderen Worten kann kontinuierlich, z. B. permanent oder in diskreten Zeitabständen, gemäß Merkmal v) eine aktuelle Position des Zubehörwerkzeugs bestimmt werden, und zwar während das Zubehörwerkzeug im Raum bewegt wird, um gemäß Merkmal vi) seine vorbestimmte Soll-Position zu erreichen. Dadurch wird das Positionieren nachvollziehbarer. Dabei kann das Verfahren ein Ausgeben der Ist-Position und/oder der Soll-Position umfassen, wodurch eine kontinuierliche Rückmeldung - z. B. an einen Nutzer - zur Ist-Position und/oder Soll-Position erfolgen kann. Das Ausgeben der ist-Position und/oder der Soll-Position kann während des Positionierens des Zubehörwerkzeugs gemäß Merkmal vi) erfolgen. Das Ausgeben kann grundsätzlich ein visuelles Ausgeben, z. B. mittels visueller Anzeige, akustisches Ausgeben, z. B. mittels akustischem Signal, und/oder haptisches Ausgeben, z. B. mittels eines Vibrationssignals, umfassen. In einer Ausführungsform kann das Ausgeben der Ist-Position und/oder der Soll-Position visuell auf einer Anzeigevorrichtung, z. B. einem mobilen Anzeigegerät oder einem Bildschirm, erfolgen. Es kann beispielsweise vorgesehen sein, dass die visuelle Ausgabe auf einem Bildschirm einer Steuervorrichtung für eine ADAS-Kalibrierung erfolgt.

In einer Ausführungsform des Verfahrens können die Ist-Position und/oder die Soll-Position automatisch protokolliert werden. Unter automatischem Protokollieren ist vorliegend ein automatisches Aufzeichnen der betreffenden Position oder Positionen in einem nichtflüchtigen Speicher oder einer Datenbank zu verstehen. Durch das automatische Protokollieren kann das Verfahren nachträglich nachvollziehbar gemacht werden, z. B. zum Zwecke einer Service-Dokumentation einer erfolgten ADAS-Kalibrierung. Das automatische Protokollieren kann während des Positionierens des Zubehörwerkzeugs erfolgen, insbesondere dann, wenn die Ist-Position und/oder die Soll-Position kontinuierlich bestimmt wird/werden. Mit anderen Worten kann vorgesehen sein, dass während des Positionierens des Zubehörwerkzeugs seine Position kontinuierlich automatisch gespeichert und damit protokolliert wird. Alternativ kann zur Datenminimierung auch vorgesehen sein, dass lediglich die Ist-Position am Ende des Positioniervorgangs, ggf. zusammen mit einer entsprechenden Soll-Position, protokolliert wird.

Das Bereitstellen der Soll-Position kann auf Grundlage eines Identifizierens, insbesondere eines automatischen Identifizierens, des Targets erfolgen. Das Identifizieren des Targets kann ein Zuordnen des Targets zu einem vorgegebenen Zubehörwerkzeug umfassen. So kann beispielsweise eine automatische und eindeutige Erkennung von Zubehörwerkzeugen und/oder automatische Bereitstellung vorbestimmter Soll-Positionen erfolgen. So kann z. B. sichergestellt werden, dass keine Zubehörwerkzeuge und/oder Soll-Positionen verwechselt werden, insbesondere im Hinblick auf eine Fahrzeugseite, auf Zubehörwerkzeuge von einem falschen Fahrzeughersteller oder Fahrzeugmodell oder auf eine falsche Reihenfolge der für eine ordnungsgemäße Kalibrierung zu verwendenden Zubehörwerkzeuge. Das Bereitstellen der Soll-Position kann ein Anfordern und Erhalten der Soll-Position von einer Datenbank oder einem Speicher umfassen. Beispielsweise kann vorgesehen sein, dass wenn ein Target von dem Kamerasystem erfasst wird, auf Grundlage zur Identifikation zuvor abgelegter vorbestimmter Merkmale des Targets, dieses identifiziert und basierend auf dieser Identifizierung eine Soll-Position aus einer Datenbank oder einem Speicher des zu positionierenden Zubehörwerkzeugs bereitgestellt wird.

Es kann auch vorgesehen sein, das mit dem Verfahren mehrere Zubehörwerkzeuge positioniert werden. So kann es erforderlich sein, dass für eine bestimmungsgemäße Kalibrierung eines oder mehrere Umfeldsensoren, insbesondere für die 360°-Umfeldüberwachung, mehrere Zubehörwerkzeuge - beispielsweise links- und rechtsseitig des Fahrzeugs angeordnete Messmatten oder Radarreflektoren - erforderlich sind. Diese können dann mit jeweils einem Target bereitgestellt und entsprechend den Merkmalen iii) bis vi) an ihre jeweilige Soll-Position positioniert werden.

Es wird außerdem ein Kalibrierwerkzeug-System vorgeschlagen, das ein Kalibrierwerkzeug mit einem Kamerasystem und ein Zubehörwerkzeug mit einem Target umfasst. Das Kalibrierwerkzeug-System ist konfiguriert zum Durchführen des oben dargelegten vorteilhaften Verfahrens, insbesondere der Merkmale iii) bis v).

Wie oben bereits erwähnt, ist das Zubehörwerkzeug nicht Bestandteil des Kalibrierwerkzeugs. Mithin ist seine grundsätzliche Positionierung physisch nicht nur von der Position des Fahrzeugs, sondern auch von der Position des Kalibrierwerkzeugs unabhängig.

Das Kamerasystem kann wenigstens zwei Kameras umfassen. Durch die Verwendung zweier Kameras können beispielsweise Tiefeneffekte und Fehlausrichtungen von Target und/oder Zubehörwerkzeug berücksichtigt werden. Die zwei Kameras können entlang der Fahrzeuglängsachse eines relativ zu dem Kalibrierwerkzeug bestimmungsgemäß ausgerichteten Fahrzeugs - insbesondere insoweit die Ausrichtung eine parallele Anordnung des Kalibrierwerkzeugs zur Fahrzeugfron oder zum Fahrzeugheck umfasst - links- und rechtsseitig des Fahrzeugs an dem Kalibrierwerkzeug angeordnet oder anordenbar sein. Mit anderen Worten können die Kameras so angeordnet oder anordenbar sein, dass sowohl die linke als auch die rechte Fahrzeugseite, also sich die zwei einander gegenüberliegenden jeweils von Fahrzeugfront bis Fahrzeugheck erstreckenden Fahrzeugseiten, im jeweiligen Sichtfeld wenigstens einer der Kameras sind. Dadurch können z. B. gleich mehrere Zubehörwerkzeuge positioniert werden, die für eine bestimmungsgemäße Kalibrierung links- und rechtsseitig des Fahrzeugs angeordnet werden müssen.

Das Target kann ein optisches Positionierungsmuster zur Positionsbestimmung des Targets umfassen. Solche Positionierungsmuster sind grundsätzlich z. B. aus dem kamerabasierten 2D- und 3D-Targettracking bekannt und können beispielsweise eine Tafel mit einer Abbildung einer regelmäßigen Punkt-Matrix oder anderen für die Targeterfassung und Positionsbestimmung geeigneten Mustern oder Positionsmarkierungen umfassen. Die räumliche Position solcher Targets, einschließlich Entfernung und Drehung, kann dann auf Grundlage eines mit dem Kamerasystem aufgenommenen Bildes algorithmisch durch Pixelauswertung des aufgenommenen Bildes bestimmt werden. Alternativ oder zusätzlich kann das Target auch ein optisches Identifikationsmuster zur Identifikation des Targets umfassen. Ein solches Identifikationsmuster kann beispielsweise durch ein vorbestimmtes Muster bereitgestellt werden, das mittels digitaler Bildverarbeitung von dem Kalibrierwerkzeug-System beispielsweise mittels Abgleichs mit einem hinterlegten Muster erkennbar und insbesondere einem Zubehörwerkzeug eindeutig zuordenbar ist. Dadurch kann eine automatische Identifikation des Zubehörwerkzeugs bereitgestellt werden.

Das Kalibrierwerkzeug-System kann ferner eine Anzeigevorrichtung zum Anzeigen der Ist-Position und/oder der Soll-Position umfassen. Die Anzeigevorrichtung kann eine mobile Anzeigevorrichtung und/oder ein Bildschirm, beispielsweise ein am Kalibrierwerkzeug angeordneter Bildschirm, sein. Die Anzeigevorrichtung kann Teil einer Steuervorrichtung für eine ADAS-Kalibrierung sein.

Das Zubehörwerkzeug kann ein Zubehörwerkzeug zur Kalibrierung einer ADAS-Funktion eines Fahrzeugs sein. Beispielsweise kann das Zubehörwerkzeug eine Radarreferenz, insbesondere ein Radarreflektor und/oder Radratrichter, eine Lidarreferenz, insbesondere ein Lidarreflektor, und/oder eine optische Bildreferenz, insbesondere eine Messmatte oder ein Messteppich, sein oder diese umfassen.

Es kann grundsätzlich zielführend sein, wenn das Target an einer bei bestimmungsgemäßer Positionierung vom Fahrzeug abgewandten und/oder dem Kamerasystem zugewandten Seite des Zubehörwerkzeugs angeordnet ist. Dadurch kann sichergestellt werden, dass das Target zumindest in oder nahe der Soll-Position des Zubehörwerkzeugs optimal in einem Sichtfeld des Kamerasystems angeordnet oder anordenbar ist. So kann z. B. vorgesehen sein, dass ein Target auf einer Rückseite eines Radarreflektorgehäuses angeordnet ist.

Schließlich werden auch ein Computerprogramm und ein computerlesbares Medium vorgeschlagen, auf dem das Computerprogramm gespeichert ist. Das Computerprogramm umfasst Befehle, die bewirken, dass das erfindungsgemäße Kalibrierwerkzeug-System das erfindungsgemäße Verfahren ausführt, insbesondere die Merkmale iii), iv) und v) des Verfahrens. Das Programm kann auf einer Steuervorrichtung für eine ADAS-Kalibrierung bereitgestellt sein.

Neben den oben bereits gennannten Wirkungen der Erfindung, zeichnet sich diese auch dadurch aus, dass etwaige Zubehörwerkzeuge diese sowohl softwareseitig, z. B. durch Bereitstellen entsprechender Soll-Positionen, oder Hardwareseitig, z. B. durch Bereitstellen entsprechender Targets, berücksichtigt werden können und/oder nachrüstbar sind.

Vorliegend wurden mehrere Ausführungsformen offenbart. Aus der folgenden detaillierten Beschreibung, die eine beispielhafte Ausführungsformen der Erfindung zeigt und beschreibt, werden der Fachperson noch weitere Ausführungsformen der vorliegenden Erfindung ersichtlich. Dementsprechend sind die Zeichnungen und die detaillierte Beschreibung als beispielhaft und nicht einschränkend zu betrachten. Wiederkehrende Merkmale sind in der Figurenbeschreibung mit denselben Bezugszeichen versehen.

Es zeigen
- Fig. 1: eine schematische Darstellung einer Ausführungsform eines erfindungsgemäßen Kalibrierwerkzeug-Systems,
- Fig. 2: eine schematische Detailansicht des Zubehörwerkzeugs aus Fig. 1 und
- Fig. 3: eine schematische Detailansicht des Targets aus Fig. 2.

Im Folgenden werden wiederkehrende Merkmale einmalig für alle Figuren beschrieben. Auf einzelnen Figuren wird nur verwiesen, wenn es zweckmäßig ist.

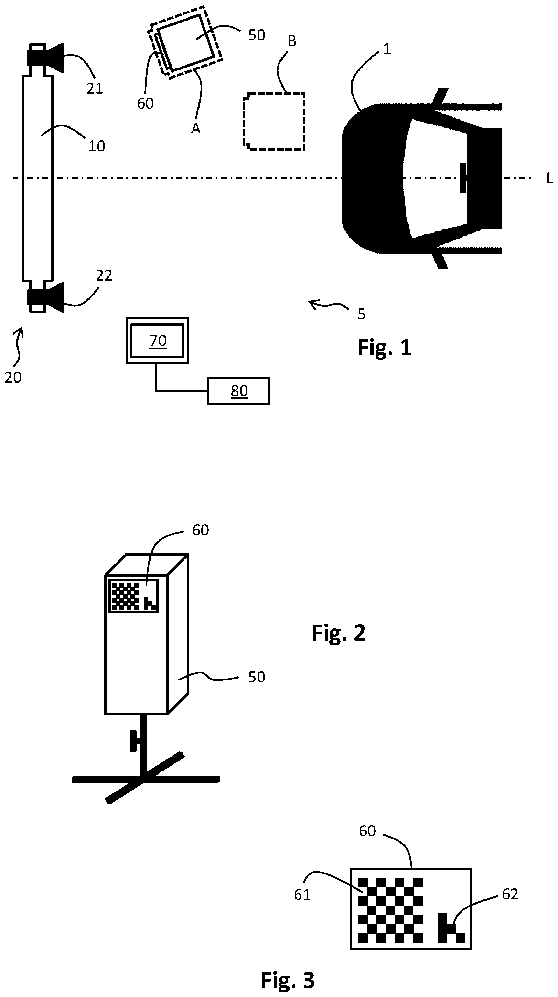

In Fig. 1 ist ein Kalibrierwerkzeug-System 5 gezeigt. Das Kalibrierwerkzeug-System 5 umfasst ein Kalibrierwerkzeug 10 mit einem Kamerasystem 20 und ein Zubehörwerkzeug 50 mit einem Target 60. Das Kalibrierwerkzeug 10 ist relativ zu einem Kraftfahrzeug 1 bestimmungsgemäß ausgerichtet. So ist das Kalibrierwerkzeug 10, das vorliegend als mobiles ADAS-Kalibrierwerkzeug mit einer Kalibrierwand ausgebildet ist, parallel zur Fahrzeugfront und in einem vom Fahrzeughersteller in Abhängigkeit des Fahrzeugmodells vorgegebenen Abstand zum Fahrzeug 1 sowie Höhe zu einem Aufstellgrund ausgerichtet. Die Fahrzeuglängsachse L verläuft typischerweise und wie vorliegend gezeigt durch die Mitte des Kalibrierwerkzeugs 10. Mit anderen Worten ist das Kalibrierwerkzeug 10 entlang der Fahrzeuglängsachse L zentriert ausgerichtet. Wie aus Fig. 1 und 2 ersichtlich, ist das Zubehörwerkzeug 50 mobil und nicht Bestandteil des Kalibrierwerkzeugs 10 und seine Positionierung physisch nicht nur von der Position des Fahrzeugs 1, sondern auch von der Position des Kalibrierwerkzeugs 10 unabhängig. Das Zubehörwerkzeug 50 ist ein Zubehörwerkzeug 50 zur Kalibrierung einer ADAS-Funktion, z. B. eines Radar-Umfeldsensors, und vorliegend gemäß Fig. 2 rein beispielhaft als Dopplergehäuse einer Radarreferenz ausgebildet, die zum Reflektieren einer Radarstrahlung eines Radarsensors im Fahrzeug 1 eingerichtet ist. Alternativ kann das Zubehörwerkezeug auch beispielsweise ein Radartrichter, eine Lidarreferenz, insbesondere ein Lidarreflektor, und/oder eine optische Bildreferenz, insbesondere eine Messmatte oder ein Messteppich, sein oder diese umfassen. Das Zubehörwerkzeug 50 umfasst ein Stativ und ist zur bestimmungsgemäßen Positionierung gegenüber dem Fahrzeug 1 höhenverstellbar.

Das Kamerasystem 20 umfasst zwei Kameras 21 und 22. Die zwei Kameras 21, 22 sind entlang der Fahrzeuglängsachse L links- und rechtsseitig des Fahrzeugs 1 an dem Kalibrierwerkzeug 10 angeordnet. Das Kamerasystem 20 ist dem Fahrzeug 1 zugewandt, sodass das Fahrzeug, insbesondere die Fahrzeugfront und zumindest teilweise die linke und rechte Seite des Fahrzeugs 1 im jeweiligen Sichtfeld der Kameras 21 und 22 angeordnet sind.

Das Zubehörwerkzeug 50 umfasst ein Target 60, das an einer vorgegebenen Stelle des Zubehörwerkzeugs 50 angeordnet ist. So ist das Target 60 an einer bei bestimmungsgemäßer Positionierung - nämlich auf der Soll-Position B - vom Fahrzeug 1 abgewandten und dem Kamerasystem 20 zugewandten Seite des Zubehörwerkzeugs 50 angeordnet. Vorliegend ist das Traget 50 also auf einer Rückseite des als Doppler- oder Radarreflektorgehäuse ausgebildeten Zubehörwerkzeugs 50 angeordnet.

Das Target 60 umfasst gemäß Fig. 3 ein optisches Positionierungsmuster 61 zur Positionsbestimmung des Targets 60 und ein optisches Identifikationsmuster 62 zur Identifikation des Targets 60. Die jeweiligen Muster sind vorliegend zur digitalen Bilderfassung und Bildverarbeitung geeignete Muster.

Das Kalibrierwerkzeug-System 5 umfasst ferner eine Anzeigevorrichtung 70 zum Anzeigen der Ist-Position A und der Soll-Position B des Targets 60 und damit des Zubehörwerkzeugs 50. Die Anzeigevorrichtung 70 ist vorliegend eine mobile Anzeigevorrichtung 70 und als Bildschirm einer Steuervorrichtung für eine ADAS-Kalibrierung ausgebildet. Die Steuervorrichtung ist außerdem eingerichtet ein Computerprogramm auszuführen, das Befehle umfasst, die bewirken, dass das Kalibrierwerkzeug-System 5 das nachstehend beschriebene Verfahren ausführt und/oder umsetzt. Es kann auch ein computerlesbares Medium vorgesehen sein, auf dem das betreffende Programm gespeichert ist.

Das Verfahren zum kamerabasierten Positionieren des Zubehörwerkzeugs 50 auf eine Soll-Position B relativ zu dem Fahrzeug 1 umfasst zunächst das bereits oben beschriebene entsprechend den Herstellerangaben bestimmungsgemäße Ausrichten des Kalibrierwerkzeugs 10 relativ zu dem Fahrzeug 1 gemäß Fig. 1. Dies kann z. B. im Zuge einer Kalibrierung der Frontkamera des Fahrzeugs 1 erfolgen. Grundsätzlich kann aber auch vorgesehen sein, dass Fahrzeug 1 und Kalibrierwerkzeug 10 derart ausgerichtet werden, dass sich das Fahrzeug 1 in einem Erfassungsbereich, insbesondere in einem Sichtfeld, des Kamerasystems 20 des Kalibrierwerkzeugs 10 befindet, sodass eine eindeutige räumliche Verortung des Fahrzeugs 1 relativ zum Kalibrierwerkzeug 10 bereitgestellt werden kann. Zusätzlich wird das oben beschriebene Zubehörwerkzeug 50 mit einem Target 60 an einer vorgegebenen Stelle des Zubehörwerkzeugs 50 bereitgestellt und im Sichtfeld des Kamerasystems 20 derart angeordnet, dass das Target 60 von dem Kamerasystem 20 erfassbar ist. Das Target 60 kann dann durch das Kamerasystem 20 des Kalibrierwerkzeugs 10 erfasst werden. Anhand des Positionierungsmusters 61 kann damit eine Positionsbestimmung der Ist-Position A des Targets und damit des Zubehörwerkzeugs 50 relativ zum Fahrzeug 1 erfolgen. Außerdem wird anhand des Identifikationsmusters 62 das Target 60 identifiziert und kann automatisch durch Abgleich mit beispielsweise im Kalibrierwerkzeug-System 10 hinterlegten Identifikationsmustern dem Zubehörwerkzeug 50, hier dem Dopplergehäuse, eindeutig zugeordnet werden. Auf Grundlage dieser Identifikation wird dann eine Soll-Position B bereitgestellt, die gemäß den hinterlegten Herstellerinformationen zum betreffenden Zubehörwerkzeug 50 eine eindeutige Position relativ zum Fahrzeug 1, insbesondere relativ zum zu kalibrierenden Fahrzeugsensor, umfassen. Das Bereitstellen der Soll-Position B erfolgt dabei durch Anfordern und Erhalten der Soll-Position von einer beispielsweise von einem Server abrufbaren Datenbank oder einem Speicher 80, die oder der z. B. über die Steuervorrichtung zur ADAS-Kalibrierung abrufbar ist. Die Ist-Position A und die Soll-Position B sind jeweils eine 3D-Position im Raum. Sie umfassen also z. B. einen Abstand, einen Winkel und eine Höhe relativ zu dem mittels des Zubehörwerkzeugs 50 zu kalibrierenden Radarsensors. Wie aus Fig. 1 ersichtlich, umfassen die Ist-Position A und die Soll-Position B auch eine räumliche Orientierung des Zubehörwerkzeugs 50 relativ zum Fahrzeug 1. Schließlich kann gemäß dem vorliegenden Ausführungsbeispiel auf Grundlage der bereitgestellten Soll-Position B das Zubehörwerkzeug 50 von einem Nutzer positioniert werden, bis die Ist-Position A mit der Soll-Position B übereinstimmt.

Beim Positionieren des Zubehörwerkzeugs 50 auf die Soll-Position B wird vorliegend die jeweils aktuelle Ist-Position A kontinuierlich bestimmt, wobei diese jeweilige Ist-Position ebenfalls kontinuierlich ausgegeben wird. Die Ausgabe erfolgt durch eine optische Anzeige auf dem Bildschirm der mobilen Anzeigevorrichtung 70. Auch die zu erreichende Soll-Position B wird auf dergleichen Anzeigevorrichtung angezeigt, sodass der Nutzer beim Positionieren des Zubehörwerkzeugs 50 geführt werden kann. Alternativ wäre aber auch eine Ausgabe und damit Zielführung auf Grundlage akustischer und/oder haptischer Signale möglich.

Zusätzlich werden während des Positionierens des Zubehörwerkzeugs 50 seine kontinuierlich bestimmte Ist-Position A und die Soll-Position B automatisch protokolliert. Alternativ kann auch vorgesehen sein, dass lediglich die Ist-Position A am Ende des Positioniervorgangs, ggf. zusammen mit einer entsprechenden Soll-Position B, protokolliert wird.

Sobald das Zubehörwerkzeug 50 auf seine Soll-Position B positioniert ist, kann eine ordnungsgemäße Kalibrierung des betreffenden Sensors des Fahrzeugs 1 erfolgen.

Selbstverständlich können mit dem hier beschriebenen Verfahren und mittels des beschriebenen Kalibrierwerkzeug-Systems 5 auch mehrere Zubehörwerkzeuge 50 positioniert werden. Diese können dann mit jeweils einem Target 60 bereitgestellt und beispielsweise gemäß der oben beschriebenen Erfassung, und Identifizierung sowie Zuordnung der jeweiligen Soll-Positionen B unter Bestimmung der zugehörigen Ist-Positionen A an die jeweiligen vorbestimmten Soll-Positionen B positioniert werden. Weitere Ausführungsformen der beschriebenen Erfindung ergeben sich für die Fachperson in naheliegender Weise.

## Patentansprüche

1. Verfahren zum kamerabasierten Positionieren eines Zubehörwerkzeugs (50), insbesondere eines Zubehörwerkzeugs (50) zur Kalibrierung einer ADAS-Funktion eines Fahrzeugs (1), auf eine Soll-Position (B) relativ zu einem Fahrzeug (1), das Verfahren umfassend:
i) bestimmungsgemäßes Ausrichten eines Kalibrierwerkzeugs (10) relativ zu einem Fahrzeug (1);
ii) Bereitstellen eines Zubehörwerkzeugs (50) mit einem Target (60) an einer vorgegebenen Stelle des Zubehörwerkzeugs (50);
iii) Erfassen des Targets (60) durch ein Kamerasystem (20) des Kalibrierwerkzeugs (10);
iv) Bereitstellen einer Soll-Position (B) des Zubehörwerkzeugs (50) relativ zum Fahrzeug (1);
v) Bestimmen einer Ist-Position (A) des Targets (60) und damit des Zubehörwerkzeugs (50) relativ zum Fahrzeug (1);
vi) Positionieren des Zubehörwerkzeugs (50), auf Grundlage der Soll-Position (B), bis die Ist-Position (A) mit der Soll-Position (B) übereinstimmt.

2. Verfahren nach Anspruch 1, wobei beim Positionieren des Zubehörwerkzeugs (50) auf die Soll-Position (B) die Ist-Position (A) kontinuierlich bestimmt wird.

3. Verfahren nach Anspruch 1 oder 2, ferner umfassend ein Ausgeben, insbesondere ein visuelles, akustisches und/oder haptisches Ausgeben, der Ist-Position (A) und/oder der Soll-Position (B), insbesondere während des Positionierens des Zubehörwerkzeugs (50).

4. Verfahren nach Anspruch 3, wobei das Ausgeben visuell auf einer Anzeigevorrichtung (70) erfolgt.

5. Verfahren nach einem der vorangehenden Ansprüche, wobei die Ist-Position (A) und/oder die Soll-Position (B), insbesondere während des Positionierens des Zubehörwerkzeugs (50), automatisch protokolliert wird.

6. Verfahren nach einem der vorangehenden Ansprüche, wobei das Bereitstellen der Soll-Position (B) auf Grundlage eines Identifizierens des Targets (60) erfolgt und optional das Identifizieren des Targets (60) ein Zuordnen des Targets (60) zu einem vorgegebenen Zubehörwerkzeug (50) umfasst.

7. Verfahren nach einem der vorangehenden Ansprüche, wobei das Bereitstellen der Soll-Position (B) ein Anfordern und Erhalten der Soll-Position (B) von einer Datenbank oder einem Speicher (80) umfasst.

8. Verfahren nach einem der vorangehenden Ansprüche, wobei die Soll-Position (B) und/oder die Ist-Position (A) eine 3D-Position in einem Raum ist, insbesondere in einem Raum, in dem das Fahrzeug (1) und das Kalibrierwerkzeug (10) als feste Bezugsgrößen definiert sind.

9. Kalibrierwerkzeug-System (5) umfassend:
ein Kalibrierwerkzeug (10) mit einem Kamerasystem (20);
ein Zubehörwerkzeug (50) mit einem Target (60);
wobei das Kalibrierwerkzeug-System (5) konfiguriert ist zum Durchführen des Verfahrens nach einem der Ansprüche 1 bis 8.

10. System (5) nach Anspruch 9, wobei das Kamerasystem (20) wenigstens zwei Kameras (21, 22) umfasst und die Kameras (21, 22) optional entlang der Fahrzeuglängsachse (L) eines relativ zu dem Kalibrierwerkzeug (10) bestimmungsgemäß ausgerichteten Fahrzeugs (1) links- und rechtsseitig des Fahrzeugs (1) an dem Kalibrierwerkzeug (10) angeordnet oder anordenbar sind.

11. System (5) nach Anspruch 9 oder 10, wobei das Target (60) ein optisches Positionierungsmuster (61) zur Positionsbestimmung des Targets (60) und/oder ein optisches Identifikationsmuster (62) zur Identifikation des Targets (60) umfasst.

12. System (5) nach einem der Ansprüche 9 bis 11, ferner umfassen eine Anzeigevorrichtung (70), insbesondere eine mobile Anzeigevorrichtung, zum Anzeigen der Ist-Position (A) und/oder der Soll-Position (B).

13. System (5) nach einem der Ansprüche 9 bis 12, wobei das Zubehörwerk-zeug (50) ein Zubehörwerkzeug (50) zur Kalibrierung einer ADAS-Funktion eines Fahrzeugs (1) ist und optional eine Radarreferenz, insbesondere einen Radarreflektor, eine Lidarreferenz, insbesondere ein Lidarreflektor, und/oder eine optische Bildreferenz, insbesondere eine Messmatte oder ein Messteppich, ist oder diese umfasst.

14. Computerprogramm, umfassend Befehle, die bewirken, dass das System (5) eines der Ansprüche 9 bis 13 das Verfahren nach einem der Ansprüche 1 bis 8 ausführt.

15. Computerlesbares Medium, auf dem das Computerprogramm nach Anspruch 14 gespeichert ist.
